(19) Europäisches Patentamt
European Patent Office
Office européen des brevets

(11) Publication number: 0 059 461
B1

(12) **EUROPEAN PATENT SPECIFICATION**

(45) Date of publication of patent specification: 15.05.85

(51) Int. Cl.$^4$: C 10 M 173/02, C 10 M 145/34

(21) Application number: 82101517.9

(22) Date of filing: 27.02.82

# (54) Water-based hydraulic fluids incorporating a polyether as a lubricant and corrosion inhibitor.

(30) Priority: 03.03.81 US 239994

(43) Date of publication of application: 08.09.82 Bulletin 82/36

(45) Publication of the grant of the patent: 15.05.85 Bulletin 85/20

(84) Designated Contracting States: BE DE FR GB IT NL

(56) References cited:
FR-A-2 450 870
US-A-3 005 776
US-A-3 346 501
US-A-3 935 116
US-A-4 138 346

(73) Proprietor: BASF WYANDOTTE CORPORATION
1609 Biddle Avenue
Wyandotte Michigan 48192 (US)

(72) Inventor: Labadie, Ernest Jacob
304 North Drive
Wyandotte Michigan 48192 (US)
Inventor: Tincher, Cline Awyn
8268 Hampton
Grosse Ile Michigan 48138 (US)
Inventor: Schwartz, Ellen Shirley
5589 Streefkerk
Warren Michigan 48092 (US)

(74) Representative: Rämisch, Friedrich, Dr. et al
BASF Aktiengesellschaft Carl-Bosch-Strasse 38
D-6700 Ludwigshafen (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 059 461 B1

## Description

This invention relates to water-based hydraulic fluids characterized by improved lubricity, anti-wear and corrosion inhibition properties.

In the technology of hydraulic power transmission, mechanical power is imparted to a fluid called "a hydraulic fluid" in the form of pressure by means of a hydraulic pump. Power is utilized where desired by tapping a source of said hydraulic fluid thus transforming the power as pressure back to mechanical motion by a mechanism called a hydraulic motor. The hydraulic fluid is utilized as a pressure and volume transmitting medium. Any non-compressible fluid can perform this function. Water is the oldest fluid used for this purpose and is still sometimes used alone for this purpose. In the prior art, there has been a heavy emphasis on the development of petroleum oils for use as hydraulic fluids and, consequently, much of the equipment utilized with hydraulic fluids has been designed and manufactured specifically for use with petroleum oils. A petroleum oil in comparison with water as a hydraulic fluid possesses the advantage of inhibiting the development of rust of the ferrous components of the mechanical equipment utilized in conjunction with hydraulic fluids, (i.e., hydraulic pumps, motors, etc.) and in preventing wear of the machinery since the hydraulic fluid must lubricate the equipment. Petroleum oils have a second advantage over the use of water as a hydraulic fluid in that the petroleum oils normally exhibit a substantially higher viscosity than water and thus contribute to reduction of the leakage of the fluid in the mechanical equipment utilized. In addition, the technology relating to additives for petroleum oils has developed to such an extent that the viscosity, foam stability, wear prevention and corrosion prevention properties of such petroleum oil-based hydraulic fluids can be further enhanced by the use of said additives.

Over the past 25 years, various substitutes for petroleum oil-based hydraulic fluids have been developed in order to overcome one of the major deficiences of petroleum oils, namely, flammability. Recent interest in the use of hydraulic fluids having up to 99 percent or more of water has resulted from the higher cost of petroleum oils and recent emphasis on problems of ecologically suitable disposal of contaminated or spent petroleum oil-based hydraulic fluids.

Metalworking fluids of the so-called "soluble oil" type have been considered for use as hydraulic fluids. Such fluids contain mineral oil and emulsifiers as well as various additives to increase corrosion resistance and improve antiwear and defoaming properties. Such fluids, when used as hydraulic fluids, are not generally suitable for use in ordinary industrial equipment designed specifically for use with the petroleum oil-based hydraulic fluids since such fluids do not adequately prevent wear damage in pumps and valves of such equipment. However, such fluids have found application in specially designed, high cost, large size equipment which, because of said large size and thus inflexibility, is not suitable for use in most industrial plants. The soluble oil hydraulic fluid usage has thus been quite limited; usage has been largely confined to large installations where flexibility and size are not critical, such as in steel mills.

It is also known to use, in equipment designed for use in mineral oil-based hydraulic fluids, flame-resistant glycol-water-based hydraulic fluids such as are disclosed in U.S. Patent No. 2,947,699. Up until now, water-based hydraulic fluids containing about 70 to 95 percent water, have had very poor lubricating characteristics. While hydraulic fluids are used primarily to transmit forces, it is necessary that they provide lubrication for the impeller, rings, vanes, gears, pistons and cylinders and other mechanical parts of hydraulic pumps in such systems in order to prevent excessive wear on such parts.

Many prior art fluids, such as the petroleum oil type, are highly flammable and unsuitable for certain uses where such fluids have frequently been the source of fire. Where these fluids are used to control such industrial operations as heavy casting machines, which are operated largely by hydraulic means, danger of fire exists. Therefore, there is a growing demand for hydraulic fluids characterized by reduced flammability.

Hydraulic fluid compositions having water as a base are disclosed in U.S. Patents Nos. 4,151,099 and 4,138,346. These patents disclose fluids comprising 1) a sulfur containing compound and 2) a phosphate ester salt. The U.S. 4,151,099 patent also includes a water-soluble polyoxyethylated ester of an aliphatic acid and a monohydric or polyhydric aliphatic alcohol, either one or both said acid and said alcohol being polyoxyethylated.

In U.S. Patent No. 3,890,238, polyoxyalkylene polymers are disclosed as useful in surfactant application problems, cutting and grinding fluids, corrosion inhibitor, lubricants and/or defoamers in aqueous systems such as cooling systems. An example of such a polymer disclosed in the patent is one having a total molecular weight of approximately 2000 and prepared by adding ethylene oxide to both ends of a polypropoxy propylene glycol base having the molecular weight of approximately 1750.

U.S. Patent No. 4,210,549 discloses an aqueous composition, wherein corrosion is inhibited, which incorporates in the composition the polymer described above for U.S. 3,890,238. However, the patent relates to an anti-freeze composition rather than a hydraulic fluid and employs a water-soluble metal silicate for corrosion inhibition, and as an organic basic pH buffer and corrosion inhibitor a hydroxybenzoic acid.

U.S. Patent No. 3,205,172 discloses a universal machining fluid which is an aqueous fluid that contains surface-active polyoxypropylene-polyoxyethylene block polymer. However, the solution is one which incorporates a diacetyl triglyceride and employs the block polymer as an emulsifier therefor.

It has been discovered in accordance with the instant invention that the addition of small but effective amounts of polyoxyalkylene copolymers, as specified below, to otherwise conventional water-based

hydraulic fluids results in improved lubricity, antiwear and corrosion inhibiting properties.

In accordance with the instant invention, a water-based hydraulic fluid, having improved lubricity, antiwear and corrosion inhibition properties can be obtained by blending a heteric or block polyoxyalkylene copolymer nonionic surface-active agent with a conventional water-based hydraulic fluid composition. These heteric or block polyoxyalkylene copolymers are the reaction product of a linear or branched active hydrogen containing compound having from 1 to 6 carbon atoms with alkylene oxides having from 3 to 6 carbon atoms and an oxygen/carbon atom ratio of less than 0.4. Alternatively but advantageously, said copolymers may also be reacted with alkylene oxide having an oxygen/carbon atom ratio of greater than 0.4. Suitable active hydrogen containing compounds include propylene glycol, ethylene glycol, diethylene glycol, glycerine, pentaerythritol, trimethylolpropane, ethylene diamine and the like. Suitable alkylene oxides having an oxygen/carbon atom ratio less than 0.4 are propylene oxide, butylene oxide, and amylene oxide. Suitable alkylene oxides having an oxygen/carbon atom ratio greater than 0.4 are ethylene oxide, butadiene dioxide and glycidol.

The polyoxyalkylene block copolymers employed are co-generic mixtures of conjugated polyoxyalkylene compounds containing in their structure the residue of an active hydrogen containing compound having from 1 to 6 carbon atoms and at least one hydrophobic oxyalkylene chain in which the oxygen/carbon atom ratio does not exceed 0.4. Alternatively, but advantageously, the copolymer may also include at least one hydrophilic oxyalkylene chain in which the oxygen/carbon atom ratio is greater than 0.4. Polymers of oxyalkylene groups obtained from propylene oxide, butylene oxide, amylene oxide, mixtures of such oxyalkylene groups with each other and with minor amounts of oxyalkylene groups obtained from ethylene oxide, butadiene dioxide, and glycidol are illustrative of hydrophobic oxyalkylene chains having an oxygen/carbon atom ratio not exceeding 0.4. Polymers of oxyalkylene groups obtained from ethylene oxide, butadiene dioxide, glycidol, mixtures of such oxyalkylene groups with each other and with minor amounts of oxyalkylene groups obtained from propylene oxide, butylene oxide and amylene oxide are illustrative of hydrophilic oxyalkylene chains having an oxygen/carbon atom ratio greater than 0.4.

The above polyoxyalkylene copolymers have a molecular weight of the 3 to 6 carbon atom oxyalkylene groups from about 950 to 3500 and contain from about 65 to 100 weight percent of the 3 to 6 carbon atom oxyalkylene groups.

Among the conjugated polyoxyalkylene compounds which can be used in the compositions of the invention are those which correspond to the formula:

$$Y[(C_3H_6O)_n(C_2H_4O)_mH]_x$$

wherein Y is the residue of an organic compound having from about 1 to 6 carbon atoms and containing x reactive hydrogen atoms in which x has a value of at least one, n has a value such that the oxypropylene content of the molecule is from about 65 to 100 weight percent and the total molecular weight of the polyoxypropylene groups is from about 950 to 3500. Compositions of this type are more particularly described in U.S. Patents Nos. 2,674,619 and 2,677,700.

Other suitable nonionic block copolymers correspond to the formula:

$$Y[(C_2H_4O)_m(C_3H_6O)_nH]_x$$

wherein Y, n, m and x have values as set forth above. Compositions of this type are more particularly described in U.S. Patent No. 3,036,118. In either of the above formulas, compounds falling within the scope of the definition for Y include, for example, propylene glycol, ethylene glycol, dipropylene glycol, diethylene glycol, glycerine, pentaerythritol, trimethylolpropane, ethylene diamine and the like. Also, the oxypropylene chains optionally, but advantageously, contain small amounts of ethylene oxide and the oxyethylene chains also optionally, but advantageously, contain small amounts of propylene oxide.

Preferred compounds of the above type are those wherein Y is the residue of propylene glycol or ethylene glycol and x is 2. The concentration of the polyoxyalkylene copolymer in the hydraulic fluid of the invention is at least about 0.05 percent by weight. There is no known maximum amount, the maximum being determined by economics, i.e., cost of the copolymer. The beneficial effects of the addition level off at about 0.4 percent by weight. It is not believed that any one would want to use more than about 2.0 percent by weight of the copolymer.

The polyoxyalkylene copolymers described above may be employed with any conventional high-water hydraulic fluid incorporating any or all of the following prior art components. For example, the hydraulic fluid may contain, as disclosed in U.S. Patents Nos. 4,151,099 and 4,138,346, a phosphate ester, a sulfur compound, and a water-soluble polyoxyethylated aliphatic ester or ether. Optionally, the fluids of the invention can include an additional corrosion inhibitor, a defoamer and a metal deactivator (chelating agent) as well as other conventional additives, such as dyes in normal amounts.

In accordance with this invention, it has been discovered that compositions useful as hydraulic fluids can be prepared having desirable lubricity, antiwear and corrosion inhibiting properties. Generally, concentrates of the hydraulic fluids of the invention are shipped to the point of use where they are diluted with tap water. The compositions of the invention provide improved results over prior art fluids even when diluted with hard water.

Water-soluble esters of ethoxylated aliphatic acids and/or water soluble ethers of ethoxylated alcohols may be incorporated in the hydraulic fluid as an additional anti-wear lubricant component. Preferred water-soluble esters or ethers are those of the ethoxylated $C_8$—$C_{36}$ aliphatic monohydric or polyhydric alcohols or aliphatic acids, and aliphatic dimer acids. Suitable esters of ethoxylated aliphatic acids or alcohols are disclosed in U.S. Patent 4,151,099 particularly beginning in column 3 thereof.

Representative water-soluble polyoxyethylated esters having about 5 to about 20 moles of oxide per mole are the polyoxyethylene derivatives of the following esters; sorbitan monooleate, sorbitan trioleate, sorbitan monostearate, sorbitan tristearate, sorbitan monopalmitate sorbitan monoisostearate, and sorbitan monolaurate.

Conventional sulfur compound additives may also be incorporated in the hydraulic fluid such as the ammonia, amine or metal salts of 2-mercaptobenzothiazole or 5-, 6- and 7-substituted 2-mercaptobenzothiazole, said salts being formed on neutralization of the free acid form of 2-mercaptobenzothiazole with a base. Such sulfur compounds are disclosed particularly beginning in column 5 of U.S. Patent 4,138,346 which is hereby incorporated by reference.

The sulfur-containing compound may also be sulfurized oxymolybdenum and oxyantimony compounds represented by:

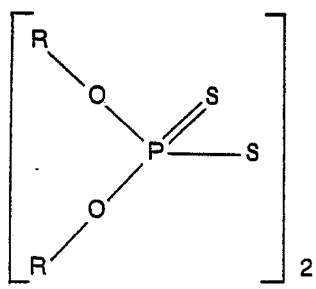 $M_2S_2O_2$

wherein M is molybdenum or antimony and R is organic and is selected from the group consisting of $C_3$—$C_{20}$ alkyl, aryl, alkylaryl radicals and mixtures thereof.

Representative useful molybdenum and antimony compounds are sulfurized oxymolybdenum or oxyantimony organo-phosphorodithioate where the organic portion is alkyl, aryl or alkylaryl and wherein said alkyl has a chain length of 3 to 20 carbon atoms.

The compositions of the invention may also contain a phosphate ester selected from the group consisting of

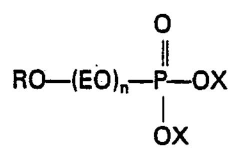

and

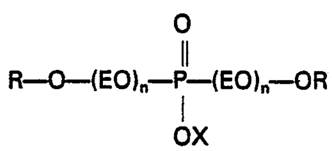

and mixtures thereof wherein ethylene oxide groups are represented by EO; R is selected from the group consisting of linear or branched chain alkyl groups wherein said alkyl groups have about 6 to 30 carbon atoms, preferably about 8 to 20 carbon atoms, or alkylaryl groups wherein the alkyl groups have about 6 to 30 carbon atoms, preferably about 8 to 18 carbon atoms, and X preferably is selected from the group consisting of hydrogen, alkali or alkaline earth metal, the residue of ammonia or an amine and mixtures thereof, and n is a number from 1 to 50. Metals such as lithium, sodium, potassium rubidium, cesium, calcium, strontium, and barium are examples of the alkali or alkaline earth metal.

The free acid form of the phosphate ester is preferably utilized in preparing hydraulic fluids in accordance with compositions of the invention. These are more fully disclosed in U.S. Patent 3,004,056 and U.S. 3,004,057, incorporated herein by reference. The free acid form may be converted to the salt form *in situ* in the preparation of the hydraulic fluids of the invention. Alternatively, the phosphate ester salts can be used directly.

The hydraulic fluid compositions of the invention may also contain an alkyldialkanolamide of the formula

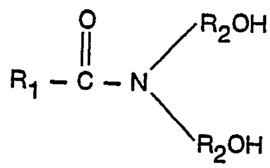

wherein $R_1$ is alkyl of 4 to 54, preferably 4 to 30, carbon atoms and $R_2$ is alkyl of 2 to 6 carbon atoms or a dialkanolamide obtained by reaction of a dialkanolamine with a dicarboxylic acid having 8 to 54 carbon atoms. The alkyldialkanolamides are known compositions in the prior art. In general, these compositions are prepared by esterifying a dialkanolamine with an alkyl dicarboxylic acid and removing water of esterification. Useful alkyl dicarboxylic acids include branched or straight chain saturated or unsaturated aliphatic monocarboxylic or dicarboxylic acids as described below. Preferably, the saturated straight chain acids are used and the preferred amides are diethanolamides. Examples of useful alkyldialkanolamides are the alkyl diethanolamides and alkyl dipropanol amides where the alkyl group is derived from a $C_8$—$C_{54}$ dicarboxylic acid.

The advantageous properties contributed to the hydraulic fluid by the alkyldialkanolamide component of the hydraulic fluid of the invention are resistance to precipitation in the presence of hard water, that is, in the presence of large amounts of calcium and magnesium ions in the water utilized to prepare the hydraulic fluid of the invention. In addition, the alkyldialkanolamides contribute to the antiwear and extreme pressure performance of the composition as well as to the metal corrosion resistance which is desirable in such fluids. The alkyldialkanolamides in aqueous solution are completely stable under neutral and alkaline conditions and show little tendency to hydrolyze or decompose on storage.

The hydraulic fluids and metalworking compositions of the invention generally consist of 60 percent to 99 percent water and 40 percent to 1 percent of additives. A high water hydraulic fluid will generally contain 95 percent or more of water. These additives can consist of concentrates comprising the polyoxyalkylene compound possibly in combination with the water-soluble esters of ethoxylated aliphatic acid and/or ethoxylated alcohol ethers and/or sulfur containing compound; and/or phosphate ester, and/or alkyldialkanolamide and, in addition, can contain defoamers, thickeners, additional corrosion inhibitors and metal deactivators or chelating agents. Preferably, said fluids consist of 75 percent to 99 percent water and 25 percent to 1 percent concentrate. The fluids are easily formulated at room temperature using distilled or deionized water although tap water can also be used without adverse effects on the fluid properties.

The amount of polyoxyalkylene block copolymer in the concentrate is preferably from 5.0 to 40 percent by weight of the concentrate.

The amount of sulfur-containing compound in the hydraulic fluid concentrate of the invention is generally 0 to 10 percent by weight and when employed is at a minimum of 1.0 percent. The concentration of the phosphate ester in the hydraulic fluid concentrate of the invention is generally 1.0 to 7.0 percent by weight of the concentrate. The concentration of the water-soluble ester of the ethoxylated aliphatic acid and/or ethoxylated alcohol ether in the hydraulic fluid concentrate of the invention is generally 1.0 percent to 7.0 percent by weight. Preferably, the proportion by weight of each of these components is 1.0 to 5.0 percent.

The percent by weight alkyldialkanolamide in the concentrate is 1 to 7, preferably 1 to 5 based upon the total weight of the concentrate. Most preferably, equal amounts of the ester of an ethoxylated aliphatic alcohol and the alkyldialkanolamide are used.

The thickeners, metal deactivators and additional corrosion inhibitors which can be added either to the concentrate or to the hydraulic fluid or metalworking compositions of the invention are as follows:

The thickener can be of the polyglycol type. Such thickeners are well known in the art and this type of thickener is the preferred thickener. The polyglycol thickeners are polyoxyalkylene polyols prepared by reacting an alkylene oxide with a linear or branched chain polyhydric alcohol. Suitable polyols contain ethylene oxide and propylene oxide and/or higher molecular weight oxides in a mole ratio of between about 100:0 to about 70:30 ethylene oxide-propylene oxide. Such thickeners are commercially available and sold under the trademark "Ucon 75H—90,000" by Union Carbide and Carbon Chemical Corporation. The specifications for this material call for a pour point of 40°F, a flash point of 252°C, a specific gravity at 20°C of approximately 1.1 and a viscosity of about 19,500 centistokes at a temperature of 38°C.

Other types of thickeners or viscosity increasing agents can be used in the hydraulic fluid and metalworking compositions of the invention such as polyvinyl alcohol, polymerization products of acrylic acid and methacrylic acid, polyvinyl pyrrolidone polyvinyl ether maleic anhydride copolymer and sorbitol. These materials are well known in the art and are utilized in varying proportions depending upon the desired viscosity and the efficiency of the thickening or viscosity increasing effect. Generally about 20 to 60 percent of such thickener in the concentrate will provide the desired viscosity in the final hydraulic fluid. By the use of such thickening agents, it is believed that the hydraulic fluids of the invention can be used in hydraulic pumps and other equipment without significant wear resulting from cavitation effects and use of such thickeners also substantially prevents internal and external leakage in the mechanical parts of the hydraulic system during the pumping of such hydraulic fluids.

Liquid-vapor corrosion inhibitors may be employed and can be any of the alkali metal nitrites, nitrates and benzoates. Certain amines are also useful. The inhibitors can be used individually or in combinations. Representative examples of the preferred alkali metal nitrates and benzoates which are useful are as follows: sodium nitrate, potassium nitrate, calcium nitrate, barium nitrate, lithium nitrate, strontium nitrate, sodium benzoate, potassium benzoate, calcium benzoate, barium benzoate, lithium benzoate and strontium benzoate.

Representative amine-type corrosion inhibitors are as follows: butylamine, propylamine, n-octylamine, hexylamine, morpholine, N-ethyl morpholine, N-methyl morpholine, aniline, triphenylamine, aminotoluene, ethylene diamine, dimethylaminopropylamine, N,N-dimethyl ethanolamine, triethanolamine, diethanolamine, monoethanolamine, 2-methyl pyridine, 4-methyl pyridine, piperazine, dimethyl morpholine, methoxypropylamine, α- and γ-picoline, isopropylaminoethanol and 2-amino-2-methylpropanol. These amines also function to neutralize the free acid form of the phosphate ester converting it to the salt form.

Imidazolines can be used for their known corrosion inhibiting properties with respect to cast iron and steel. Useful imidazolines are heterocyclic nitrogen compounds having the formula:

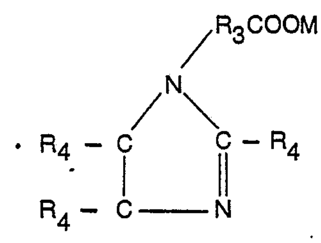

wherein $R_4$ is hydrogen or a monovalent radical selected from the group consisting of alkyl of 1 to 18 carbon atoms, alkylene of 1 to 18 carbon atoms, aryl, alkylaryl having 1 to 18 carbon atoms in the alkyl portion, wherein $R_3$ is a divalent radical selected from the group consisting of alkyl and alkoxy having 2 to 18 carbon atoms where the alkoxy is derived from alkylene oxides selected from the group consisting of ethylene oxide, propylene oxide, butylene oxide, tetrahydrofuran and mixtures thereof and wherein M is an alkali metal.

It is also contemplated to add other known corrosion inhibitors. Besides the amines, alkali metal nitrates, benzoates and nitrites listed above, the alkoxylated fatty acids are useful as corrosion inhibitors.

The above additional corrosion inhibitors are employed in the hydraulic fluid concentrates in total amount of about 2 to 25 percent by weight, preferably about 5 to 15 percent by weight. More specifically, it is preferred to employ benzoates or benzoic acid in amount of about 1 to 5 percent, amines in amount of about 2 to 10 percent, and imidazolines in amount of about 2 to 10 percent all by weight of the total amount of concentrate.

Metal deactivators may be used primarily to chelate copper and copper alloys. Such materials are well known in the art and individual compounds can be selected from the broad classes of materials useful for this purpose such as the various triazoles and thiazoles as well as the amine derivatives of salicylidenes. Representative specific examples of these metal deactivators are as follows: benzotriazole, tolyltriazole, 2-mercaptobenzothiazole, sodium-2-mercaptobenzothiazole, and N,N'-disalicylidene-1,2-propanediamine. The concentration of metal deactivator to water in the hydraulic fluid concentrates of the invention is generally about 2 to 10 percent by weight and preferably about 3 to 5 percent by weight.

Conventional defoamers such as the well known organic surfactant defoamers, for example nonionic defoamers such as the polyoxyalkylene type nonionic surfactants, may also be employed in normal amounts. Preferred amounts are about 0.5 to 5.0 percent by weight of the total amount of concentrate. The concentrate may contain other conventional hydraulic fluid additives and possibly some impurities in normal minimal amounts.

The phosphate esters and esters of ethoxylated aliphatic acids and alcohols are water-soluble in the sense that no special method is required to disperse these materials in water and keep them in suspension over long periods of time. As a means of reducing corrosion, the pH of the water in the fluids of the

invention is maintained above 7.0, preferably 7.0 to about 11.0, and most preferably 9 to about 10.5. Preferably, pH of the fluid concentrates is adjusted with an alkali metal or alkaline earth metal hydroxide, or carbonate, ammonia or an amine. Where these are employed, benzoic acid may be employed in lieu of alkali metal benzoates. The sulfurized molybdenum or antimony compounds on the other hand are insoluble in water and require emulsification prior to use, for instance, with anionic or nonionic surfactants. Useful representative anionic or nonionic surfactants are: sodium petroleum sulfonate, i.e., sodium dodecylbenzene sulfonate; polyoxyethylated fatty alcohol or fatty acid and polyoxyethylated alkyl phenol.

The concentrates of the hydraulic fluids of this invention can be made up completely free of water or contain any desired amount of water but preferably contain up to 85 percent by weight of water to increase fluidity and provide ease of blending at the point of use. As pointed out above, these concentrates are typically diluted with water in the proportion of 1:99 to 40:60 to make up the final hydraulic fluid.

The preferred final hydraulic fluid of the invention contains 0.05 to 2 percent by weight of the polyoxyalkylene copolymer and optionally may include by weight one or more of the following: about 0.01 to 3.0 percent water soluble ester of exothylated aliphatic acid and/or ethoxylated alcohol ether, about 0.01 to 2.0 percent sulfur-containing compound, about 1 to 7 percent thickener, about 0.01 to 3.0 percent ethoxylated phosphate ester, or salt thereof, about 0.01 to 3 percent alkyldialkanolamide, about 0.05 to 10 percent additional corrosion inhibitors and most preferably about 0.01 to 2 percent benzoic acid and/or benzoates, about 0.02 to 2 percent amine type corrosion inhibitors and about 0.02 to 2 percent ethoxylated imidazoline, about 0.02 to 5 percent metal deactivators, about 0.02 to 1 percent defoamers plus other conventional additives such as dyes and impurities in normal amounts. For a high water fluid the total amount of additives should not exceed 5 percent. High water fluids generally do not contain thickeners.

The following examples more fully describe the hydraulic fluids of the invention and show the unexpected results obtained by their use. In the following examples of the invention, the wear properties of the hydraulic fluids were tested utilizing the Shell four-ball test method which is a standard test method for lubricants. In these tests, a 7.5 kilogram load at 1800 rpm was used at room temperature using 50 to 100 steel balls. The test was run for 20 minutes.

The degree of corrosion inhibition of the additives was determined by a rust test using cast iron chips and steel plates measuring 7.6 centimeters by 20.3 centimeters. More specifically, 10 grams of cast iron chips are placed in a small mixing dish, 10 milliliters of the sample are added, and they are stirred for one minute. The excess liquid is then decanted with the dish held in a pouring position for 15 seconds. A short piece (approximately 1.0 centimeters long) of radiator hose 3.8 centimeters ID is placed on the steel plate and the iron chips are poured into the piece of hose spreading as evenly as possible. The piece of hose is then removed and the chips are allowed to stand on the plate for 24 hours. The chips are then removed and the amount of rust left on the plate is measured using a scale of 0 to 100 percent of the area covered.

In the examples, the polyoxyalkylene copolymers are as follows:

Copolymer #1 defines the polyoxyethylene adduct of a polyoxypropylene hydrophobic base, said hydrophobic base having a molecular weight of about 1750 wherein the oxypropylene content is about 90 weight percent of the molecule. This product is readily available on the market under the trademark Pluronic®L61.

Copolymer #2 defines the polyoxyethylene adduct of a polyoxypropylene hydrophobic base, said base having a molecular weight of about 1750 wherein the oxypropylene content is about 20 percent by weight of the molecule. This product is readily available on the market under the trademark Pluronic®F68.

Copolymer #3 defines the polyoxyethylene adduct of a polyoxypropylene hydrophobic base, said base having a molecular weight of about 950 wherein the oxypropylene content is about 90 percent of the molecule. This product is readily available on the market under the trademark Pluronic®L31.

Copolymer #4 defines the polyoxyethylene adduct of a polyoxypropylene hydrophobic base, said base having a molecular weight of about 4000 wherein the oxypropylene content is about 80 percent by weight of the molecule. This product is readily available on the market under the trademark Pluronic®L122.

Copolymer #5 defines the polyoxyethylene adduct of a polyoxypropylene hydrophobic base, said base having a molecular weight of about 1750 wherein the oxypropylene content is about 60 percent by weight of the molecule. This product is readily available on the market under the trademark Pluronic®L64.

The phosphate ester utilized in the examples is reputed to be produced by the reaction of one mole of phosphorus pentoxide with a condensation product of one mole of nonylphenol and approximately 4 moles of ethylene oxide in accordance with the methods disclosed in U.S. Patent Nos. 3,004,056 and 3,004,057.

The examples are intended for the purpose of illustration. Throughout the application, all parts, proportions, and percentages are by weight and all temperatures are in degrees centigrade unless otherwise noted.

## Example 1

A hydraulic fluid concentrate, indicated herein as concentrate A, was prepared by blending 78.45 parts by weight of water, 3 parts by weight of ethoxylated phosphate ester, 3 parts by weight of a $C_{21}$ diethoxylated diacid mixed with a $C_{21}$ diethanol diamine, 5 parts by weight of 2-amino-2-methyl-1-propanol (95 percent aqueous solution), 4.5 parts by weight of a 50 percent by weight aqueous solution of tolyltriazole, 4 parts by weight of a 95 percent 2-heptyl-1-(ethoxypropionic acid) imidazoline, sodium salt in

5 percent of ethanol, 2 parts by weight of benzoic acid, and 0.05 percent by weight dye.

From Concentrate A, the following fluids were prepared:

| | Weight % | | | |
|---|---|---|---|---|
| Fluid | 1 | 2 | 3 | 4 |
| Concentrate A | 5 | 5 | 5 | 5 |
| Polyoxyalkylene Copolymer #1 | 0 | 0.15 | 0.4 | 0.8 |
| Water | 95 | 94.85 | 94.6 | 94.2 |

The wear scar diameter and percent rust on a steel panel were determined as set forth above with the following results:

| Fluid | 1* | 2 | 3 | 4 |
|---|---|---|---|---|
| Wear scar diameter (mm) | 0.38 | 0.37 | 0.30 | 0.28 |
| % Rust on steel panel | 62 | 25 | 20 | 30 |

*Average of 3 tests

Both the wear scar diameter and the percent of rust on a steel panel decreased in solutions containing at least 0.15 percent polyoxyalkylene copolymer.

Example 2

A hydraulic fluid concentrate, indicated herein as concentrate B, was prepared by blending 81.5 parts by weight of water, 3 parts by weight of ethoxylated phosphate ester, 5 parts by weight of 2-amino-2-methyl-1-propanol (95 percent aqueous solution), 4.5 parts by weight of a 50 percent by weight aqueous solution of tolyltriazole, 4 parts by weight of a 95 percent 2-heptyl-1-(ethoxypropionic acid) imidazoline, sodium salt in 5 percent of ethanol, and 2 parts by weight of benzoic acid.

From Concentrate B, the following fluids were prepared:

| | Weight % | |
|---|---|---|
| Fluid | 5 | 6 |
| Concentrate B | 5 | 5 |
| Polyoxyalkylene Copolymer #1 | — | 0.15 |
| $C_{21}$ diethoxylated diacid mixed with a $C_{21}$ diethanol diamide. | 0.15 | — |
| Water | 94.85 | 94.85 |

The wear scar diameter was determined as set forth above with the following results:

| Fluid | 5 | 6 |
|---|---|---|
| Wear scar diameter | 0.35 | 0.26 |

This example demonstrates that polyoxyalkylene copolymer #1 is more effective than $C_{21}$ diethoxylated diacid mixed with a $C_{21}$ diethanol diamide in the wear scar diameter test.

Example 3

A hydraulic fluid concentrate, indicated herein as concentrate C, was prepared by blending 83.5 parts by weight of water, 3 parts by weight of ethoxylated phosphate ester, 3 parts by weight of a $C_{21}$ diethoxylated diacid mixed with a $C_{21}$ diethanol diamide, 5 parts by weight of 2-amino-2-methyl-1-propanol (95 percent aqueous solution), 4.5 parts by weight of a 50 percent by weight aqueous solution of tolyltriazole, 4 parts by weight of a 95 percent solution of 2-heptyl-1-(ethoxypropionic acid) imidazoline, sodium salt in 5 percent ethanol, and 2 parts by weight of benzoic acid.

From Concentrate C, the following fluids were prepared:

| | Weight % | |
|---|---|---|
| Fluid | 7 | 8 |
| Concentrate C | 5 | 5 |
| Polyoxyalkylene Copolymer #1 | — | 0.25 |
| Polyoxyalkylene Copolymer #2 | 1 | 1 |
| Water | 94 | 93.75 |

The wear scar diameter was determined as set forth above with the following results:

| Fluid | 7 | 8 |
|---|---|---|
| Wear scar diameter | 0.64 | 0.42 |

This demonstrates that a copolymer containing only 20 percent oxypropylene groups is ineffective in reducing wear scar diameter.

Example 4

A hydraulic fluid concentrate, indicated herein as concentrate D, was prepared by blending 78.5 parts by weight of water, 3 parts by weight of ethoxylated phosphate ester, 3 parts by weight of a $C_{21}$ diethoxylated diacid mixed with a $C_{21}$ diethanol diamine, 5 parts by weight of 2-amino-2-methyl-1-propanol (95 percent aqueous solution), 4.5 parts by weight of a 50 percent by weight aqueous solution of tolyltriazole, 4 parts by weight of a 95 percent solution of 2-heptyl-1-(ethoxypropionic acid) imidazoline, sodium salt in 5 percent ethanol, and 2 parts by weight of benzoic acid.

From Concentrate D, the following fluids were prepared:

| | Weight % | | | |
|---|---|---|---|---|
| Fluid | 9 | 10 | 11 | 12 |
| Concentrate D | 5 | 5 | 5 | 5 |
| Polyoxyalkylene Copolymer #3 | 0.8 | — | — | — |
| Polyoxyalkylene Copolymer #1 | — | 0.8 | — | — |
| Polyoxyalkylene Copolymer #4 | — | — | 0.8 | — |
| Polyoxyalkylene Copolymer #5 | — | — | — | 0.8 |
| Water | 94.2 | 94.2 | 94.2 | 94.2 |

The percent rust on a steel panel was determined as set forth above with the following results:

| Fluid | 9 | 10 | 11 | 12 |
|---|---|---|---|---|
| % Rust on steel panel | 15 | 10 | 60 | 40 |

This example demonstrates that the percent of oxypropylene groups in the copolymer must exceed 60 percent even with a molecular weight of the oxypropylene groups as low as 1750 and that even with a percentage of oxypropylene groups as high as 80 the molecular weight of the oxypropylene groups must be less than 4000.

Example 5

Two complete hydraulic fluid compositions were prepared by blending 98.53 parts by weight of water, 0.25 parts by weight of 2-amino-2-methyl-1-propanol (95 percent aqueous solution), 0.225 parts by weight of a 50 percent by weight aqueous solution of tolyltriazole, and 1 part by weight of Copolymer #1 in the first fluid (#13) and no polyoxyalkylene copolymer in the second fluid (#14).

The percents rust on a steel panel were determined as set forth above with the following results:

| Fluid | 13 | 14 |
|---|---|---|
| % Rust on steel panel | 5% | 60% |

This example demonstrates that even with a fluid having minimum protection from other additives, a pronounced corrosion inhibiting effect is achieved by the addition of a small amount of the polyoxyalkylene polymer in accordance with the instant invention.

**Claims**

1. A water-based hydraulic fluid composition containing a heteric or block polyoxyalkylene copolymer which is the reaction product of a linear or branched active hydrogen containing compound having from 1 to 6 carbon atoms with alkylene oxides having from 3 to 6 carbon atoms and an oxygen/carbon atom ratio of less than 0.4, and optionally alkylene oxides having an oxygen/carbon atom ratio greater than 0.4, said copolymer having a molecular weight of the 3 to 6 carbon atom oxyalkylene groups from 950 to 3500 and containing 65 to 100 percent by weight of the 3 to 6 carbon atom oxyalkylene groups.

2. A concentrate for the hydraulic fluid of claim 1 wherein the amount of said conjugated polyoxyalkylene compounds is at least 0.5 percent by weight of the concentrate.

3. The concentrate of claim 2 wherein said nonionic polymer corresponds to the formula

$$Y[(C_3H_6O)_n(C_2H_4O)_mH]_x$$

wherein Y is the residue of an organic compound having from 1 to 6 carbon atoms and containing x reactive hydrogen atoms in which x has a value of at least one, n has a value such that the oxypropylene content of the molecule is from 65 to 100 weight percent and the total molecular weight of the polyoxypropylene groups is from 950 to 3500.

4. The concentrate according to claim 2 wherein said concentrate includes a phosphate ester or salt thereof selected from the group consisting of

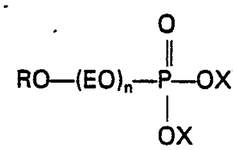

and

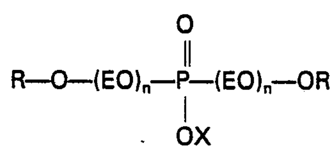

and mixtures thereof wherein ethylene oxide groups are represented by EO; R is selected from the group consisting of linear or branched chain alkyl groups wherein said alkyl groups have 6 to 30 carbon atoms, preferably 8 to 20 carbon atoms, or alkylaryl groups wherein the alkyl groups have 6 to 30 carbon atoms, preferably 8 to 18 carbon atoms, and X is selected from the group consisting of hydrogen, alkali or alkaline earth metal, the residue of ammonia or an amine and mixtures thereof, and n is a number from 1 to 50; an alkyldialkanolamide of the formula

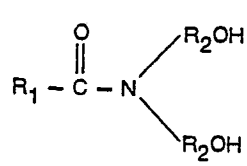

wherein $R_1$ is alkyl of 4 to 54 carbon atoms and $R_2$ is alkyl of 2 to 6 carbon atoms, or an dialkanolamide obtained by reaction of an dialkanolamine with a dicarboxylic acid having 8 to 54 carbon atoms, a metal deactivator; and an additional conventional corrosion inhibitor.

**Patentansprüche**

1. Hydraulikflüssigkeit auf Wasser-Basis, enthaltend ein Hetero- oder Block-Polyoxalkylencopolymerisat, das das Reaktionsprodukt aus einer linearen oder verzweigtkettigen, aktiven Wasserstoff enthaltenden Verbindung mit 1 bis 6 Kohlenstoffatomen und Alkylenoxiden mit 3 bis 6 Kohlenstoffatomen und einem Sauerstoff/Kohlenstoff/Atomverhältnis von weniger als 0,4 sowie gegebenenfalls Alkylenoxide mit einem Sauerstoff/Kohlenstoff/Atomverhältnis von mehr als 0,4, wobei das Copolymerisat ein Molekulargewicht der Oxalkylengruppen mit 3 bis 6 Kohlenstoffatomen von 950 bis 3500 aufweist und 65 bis 100 Gewichtsprozent der Oxalkylengruppen mit 3 bis 6 Kohlenstoffatomen enthält.

2. Konzentrat der Hydraulikflüssigkeit nach Anspruch 1, dadurch gekennzeichnet, daß die Menge der konjugierten Polyoxalkylen-Verbindungen mindestens 0,5 Gewichtsprozent, bezogen auf das Konzentrat, beträgt.

3. Konzentrat nach Anspruch 2, dadurch gekennzeichnet, daß das nichtionogene Polymerisat der Formel

$$Y[(C_3H_6O)_n(C_2H_4O)_mH]_x$$

entspricht, in der Y den Rest einer organischen Verbindung mit 1 bis 6 Kohlenstoffatomen und x aktiven Wasserstoffatomen bedeutet, wobei x mindestens den Wert 1 hat, und n einen solchen Wert hat, daß der Oxypropylen-Gehalt des Moleküls 65 bis 100 Gewichtsprozent und das gesamte Molekulargewicht der Polyoxypropylengruppen 950 bis 3500 beträgt.

4. Konzentrat nach Anspruch 2, dadurch gekennzeichnet, daß es einen Phosphatester oder ein Phosphatsalz der Formel

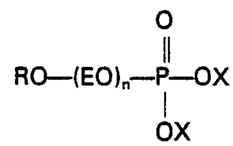

oder

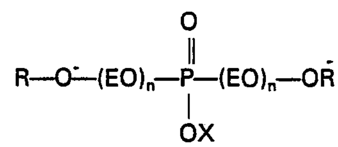

oder Mischungen daraus, in der EO Ethylenoxidgruppen bedeuten, R eine lineare oder verzweigtkettige Alkylgruppe mit 6 bis 30, vorzugsweise 8 bis 20 Kohlenstoffatomen oder eine Alkylarylgruppe bedeutet, in der die Alkylgruppe 6 bis 30, vorzugsweise 8 bis 18 Kohlenstoffatome besitzt, X Wasserstoff, Alkali- oder Erdalkalimetall, den Rest von Ammoniak oder einem Amin und Mischungen daraus bedeutet und n eine Zahl von 1 bis 50 ist, ein Alkyldialkanolamid der Formel

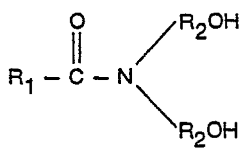

in der $R_1$ Alkyl mit 4 bis 54 Kohlenstoffatomen und $R_2$ Alkyl mit 2 bis 6 Kohlenstoffatomen bedeuten, oder ein Dialkanolamid, das durch Umsetzen eines Dialkanolamins mit einer Dicarbonsäure mit 8 bis 54 Kohlenstoffatomen erhalten wurde, einen Metalldeaktivator und einen weiteren herkömmlichen Korrosionsinhibitor enthält.

**Revendications**

1. Composition de fluide hydraulique à base d'eau, contenant un copolymère de polyoxyalkylène en blocs ou hétérogène, qui est le produit de réaction d'un composé contenant de l'hydrogène actif, linéaire ou ramifié, ayant de 1 à 6 atomes de carbone, avec des oxydes d'alkylène ayant de 3 à 6 atomes de carbone et un rapport atomique, oxygène/carbone, de moins de 0,4, et éventuellement des oxydes d'alkylène ayant un rapport atomique, oxygène/carbone, supérieur à 0,4, ledit copolymère ayant un poids moléculaire des

groupes oxyalkylène à 3 à 6 atomes de carbone de 950 à 3500 et contenant 65 à 100% en poids des groupes d'oxyalkylène de 3 à 6 atomes de carbone.

2. Concentré pour le fluide hydraulique de la revendication 1, dans lequel la quantité desdits composés de polyoxyalkylène conjugués est d'au moins 0,5% en poids du concentré.

3. Concentré selon la revendication 2, dans lequel ledit polymère non ionique correspond à la formule:

$$Y[(C_3H_6O)_n(C_2H_4O)_mH]_x$$

dans laquelle Y est le résidu d'un composé organique ayant de 1 à 6 atomes de carbone et contenant X atomes d'hydrogène réactif, dans laquelle X a une valeur d'au moins un, *n* a une valeur telle que la teneur en oxypropylène de la molécule est de 65 à 100% en poids et le poids moléculaire total des groupes de polyoxypropylène est de 950 à 3500.

4. Concentré selon la revendication 2, où ledit concentré comprend un phosphate ester ou sel de cet ester, choisi dans le groupe constitué par

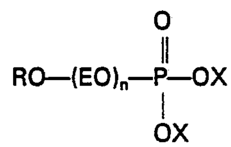

et

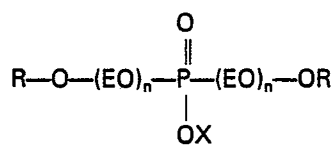

et des mélanges de ceux-ci, où les groupes d'oxyde d'éthylène sont représentés par EO; R est choisi dans le groupe constitué de groupes alkyle à chaîne linéaire ou ramifiée où lesdits groupes alkyle ont de 6 à 30 atomes de carbone, de préférence 8 à 20 atomes de carbone, ou des groupes alkylaryle où les groupes aryle ont 6 à 30 atomes de carbone, de préférence 8 à 18 atomes de carbone et X est choisi dans le groupe constitué d'hydrogène, de métal alcalin ou alcalino-terreux, le résidu d'ammoniac ou d'une amine et des mélanges de ceux-ci et *n* est un nombre de 1 à 50; un alkyldialcanolamide de la formule:

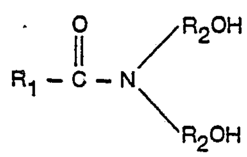

dans laquelle $R_1$ est un alkyle de 4 à 54 atomes de carbone et $R_2$ est un alkyle de 2 à 6 atomes de carbone, ou un dialcanolamide obtenu par réaction d'une dialcanolamine avec un acide dicarboxylique ayant 8 à 54 atomes de carbone, un métal désactivant; et un inhibiteur de corrosion habituel additionnel.